# EUROPEAN PATENT SPECIFICATION

(11) **EP 4 517 245 B1**
(45) Date of publication and mention of the grant of the patent: **28.01.2026**
(21) Application number: 23461641.5
(22) Date of filing: 30.08.2023
(51) Int. Cl.: F28F 3/04

(54) **HEAT EXCHANGER CORE LAYER PIN**
WÄRMETAUSCHERKERNSCHICHTSTIFT
BROCHE DE COUCHE CENTRALE D'ÉCHANGEUR DE CHALEUR

(43) Date of publication of application: 05.03.2025
(73) Proprietor: Hamilton Sundstrand Corporation, Charlotte, NC 28217 (US)
(72) Inventor: MECZKOWSKI, Tomasz, 51-317 Wroclaw (PL); KALUZA, Przemyslaw Stanislaw, 51-317 Wroclaw (PL)
(74) Representative: Dehns

(56) References cited:
- EP-A1- 4 063 779
- FR-A1- 3 125 116
- US-A1- 2022 003 165

## Description

### TECHNICAL FIELD

The present disclosure relates to a pin for a heat exchanger, a layer for a heat exchanger, a heat exchanger, and a method of making a layer for a heat exchanger. Specifically, the present invention relates to a pin as defined in the preamble of claim 1, and as illustrated in FR 3 125 116.

### BACKGROUND

Heat exchangers are used in many fields and exist in many forms. Typically, heat exchangers involve the transfer of heat between a first and a second fluid flowing in adjacent channels or layers of the heat exchanger. Many heat exchanger designs have a flowpath defined between an inlet of the heat exchanger and an outlet of the heat exchanger, and between fluid flow layers separated by plates that extend between the inlet and outlet. Heat exchange to or from a fluid flowing in the flowpath occurs primarily through the plates. It is known to provide pins or fins that extend in the flowpath, between the plates, to improve the heat transfer and create turbulence in the fluid flow. Various pin or fin shapes are known including cylindrical, triangular, rectangular or teardrop cross-sectional shapes.

Such conventional heat exchangers have generally been considered satisfactory for their intended purpose but there is a need in the art for improved heat exchangers.

### SUMMARY

According to a first aspect, there is provided a pin for a core layer of a heat exchanger as defined by claim 1.

Also provided is layer for a heat exchanger, the layer comprising: an inlet; an outlet; an upper sheet; a lower sheet; a fluid flowpath defined between the upper sheet and lower sheet and from the inlet to the outlet; and at least one pin, as defined above. disposed in the flowpath and connecting the upper sheet to the lower sheet.

Defining a fluid flowpath between upper and lower sheets where the fluid flows past pins formed with such a shape increases the turbulence of the fluid flow in the flowpath. By increasing the turbulence of the fluid flow, the heat transfer of the heat exchanger layer is increased. Furthermore, the pins having an increased primary heat transfer area compared to conventional/smooth pins, whilst minimising the pressure drop of the fluid passing the pin.

The layer may comprise a plurality of such pins disposed in the flowpath, each pin connecting between the upper sheet and lower sheet and having a pin height defined between the upper and lower sheet.

At least one of the upper sheet and the lower sheet may be formed from an aluminium alloy, a titanium alloy, an austenitic nickel-chromium-based superalloy, stainless steel or copper.

According to another aspect, there is provided a heat exchanger comprising a first layer and a second layer; wherein the first layer is a layer according to the preceding aspect; wherein the second layer is a layer according to the preceding aspect; and wherein the upper sheet of the second layer is also the lower sheet of the first layer.

The average distance between the upper and lower sheets of the first layer may be different from the average distance between the upper and lower sheets of the second layer. Put another way, the first layer may have a different average height from the second layer. The number of pins disposed in the flowpath of the first layer may be different from the number of pins disposed in the flowpath of the second layer.

A pin pattern of the pin(s) disposed in the flowpath of the first layer may be different from a pin pattern of the pin(s) disposed in the flowpath of the second layer.

According to another aspect, there is provided a method of manufacturing such a pin for a heat exchanger using additive manufacture.

Using additive manufacturing allows pins to be created having the required shape. The method may comprise additively manufacturing a plurality of pins on the lower sheet.

The method may comprise providing a sidewall extending between the lower sheet and the upper sheet; and optionally additively manufacturing one or more sets of turning vanes on the lower sheet at the same time as additively manufacturing the or each pin.

Additively manufacturing the sidewall may be simpler than using traditional manufacturing techniques. Turning vanes may be desirable in layers having a non-straight flow path, e.g. a U-shaped flow path, and additively manufacturing these may be simpler than using traditional (non-additive) manufacturing techniques.

In an example, the sheets may also be manufactured using additive manufacture.

Each step of additive manufacturing may be performed using a metal powder bed SLM additive manufacturing process, or other AM methods.

A powder of the metal powder bed may be one of an aluminium alloy, a titanium alloy, and an austenitic nickel-chromium-based superalloy.

SLM is a relatively mature additive-manufacturing technology and typically allows recovery of unused (i.e. unmelted) powder from the finished article. The unused powder may be used in future additive-manufacturing operations and thus this method may be cost effective by minimizing wastage of (potentially expensive) metal powder.

The heat exchanger constructed in accordance with this aspect may have a compact design allowing for good heat exchange between fluids flowing in their respective pluralities of layers.

### BRIEF DESCRIPTION

Certain embodiments of the present disclosure will now be described in greater detail by way of example only and with reference to the accompanying drawings in which:
Figure 1 shows a perspective view of a heat exchanger;
Figure 2 shows a plan view of a layer within the heat exchanger;
Figure 3 shows a detailed view of pins according to the disclosure in the heat exchanger;
Figures 4A to 4D shows a single pin of the type according to the disclosure, from different views.
Figure 5 shows a pin such as shown in Figs. 4A to 4D showing the flow of fluid relative to the pin.

### DETAILED DESCRIPTION

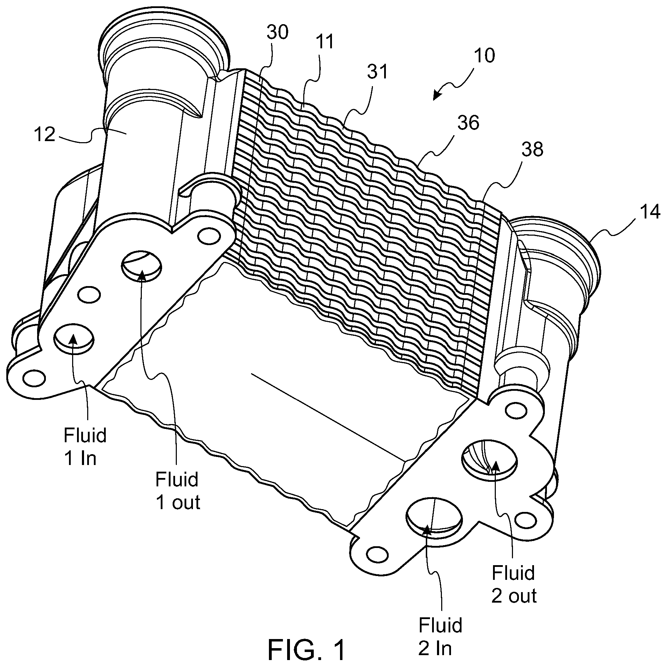

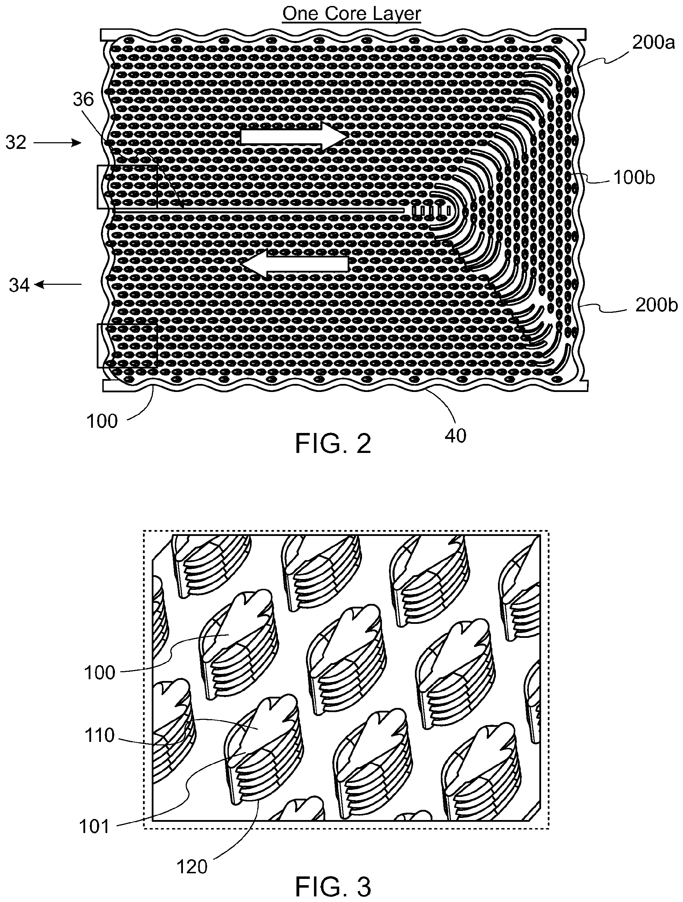

Figure 1 shows a heat exchanger 10 having a heat exchanger core 11, a first header 12 for conveying a first fluid e.g. oil into and out of the core 11, and a second header 14 for conveying a second fluid e.g. oil into and out of the core 11. The heat exchanger may be primarily used to exchange heat between the first fluid and the second fluid. However, heat may also be exchanged out through the sidewall 40 (Fig. 2) as well as out of the top and bottom sides of the heat exchanger core 11. The first and second fluids may be oil - in an oil-oil cooler (OOC), but other fluids, including water or air may also be used.

The first header 12 connects to a first plurality of layers 30 of the heat exchanger core 11. The second header 14 connects to a second plurality of layers 31 of the heat exchanger core 11. The first plurality of layers 30 is interleaved with the second plurality of layers 31 so that the first fluid flows through every second layer and the second fluid flows through the layers in-between the first fluid layers, providing alternate layers of first fluid flow and second fluid flow. The individual layers are typically rotated 180 degrees relative to each other. At least within the heat exchanger 10, the first fluid flowing in the first plurality of layers 30 is fluidly isolated from the second fluid flowing in the second plurality of layers by the sheets separating the layers. Fig. 2 shows one core layer 30. Any layer of the first and second pluralities of layers may be a layer 30 as shown in Figure 2.

As shown in Figure 2, the layer 30 comprises an inlet 32 and an outlet 34, a sidewall 40, and (not shown in Fig. 2) an upper sheet, and a lower sheet 38. In use, fluid is constrained by the upper sheet, lower sheet 38, and sidewall 40, so as to flow from the inlet 32, through the layer 30, to the outlet 34. That is, the upper sheet, lower sheet 38, and sidewall 40 together define a flowpath for fluid flowing in the layer 30. The layer 30 shown in Figure 2 defines a generally U-shaped flowpath, indicated by the arrows in Fig. 2, between the inlet 32 and outlet 34, with the inward flow separated from the outward flow by a separation bar 36. The upper sheet (not shown) of a given layer, may simultaneously function as the lower sheet 38 of layer (e.g. layer 30) immediately above.

With reference to Figure 1, a first portion of the first header 12 connects to the inlet side 32 of each layer 30 of the first plurality of layers, and, in use, fluid is pumped into the first portion and flows into the inlet side 32 of every layer connected to the first header 12. The fluid flows through each of the layers 30 and out through the outlet 34 of each layer of the first plurality of layers. The outlets 34 are all connected to a second portion of the first header 12, the second portion being fluidly isolated from the first portion. Fluid flows into the second portion and then out of the first header 12.

Similarly, a first portion of the second header 14 connects to the inlet side 32 of each layer 31 and, in use, fluid is pumped into the first portion and flows into the inlet side 32 of every layer connected to the second header 14. The fluid flows through each of the layers 31and out through the outlet 34 of each layer. The outlets 34 are all connected to the second portion of the second header 14, the second portion being fluidly isolated from the first portion. Fluid flows into the second portion and then out of the second header 14.

Within each layer 30, as shown in Figure 3, one or more pins 100 are disposed in the fluid flowpath. Each pin 100 extends between the lower sheet 38 and the upper sheet (not shown in Fig. 3).

Additionally, (best seen in Fig. 2) there may be provided within each layer 30 a first set of turning vanes 200a that may turn the flow through 90 degrees, and a second set of turning vanes 200b that may turn the flow through a further 90 degrees, to create the overall U-shaped flow path. A plurality of pins 100b may be disposed between the first and second sets of turning vanes 200a, b. The pins 100 shown in Figure 3 are all arranged within the layer 30 such that each pin 100 faces directly into a local flow direction.

Figure 3 shows the shape of the pins 100, 100b in more detail. In the direction from the lower sheet to the upper sheet or vice versa, the pins have pin body 101 extending between a first end 110 and a second end 120. The cross section of the pin 100, in the plane across the ends 110, 120 may take a variety of shapes e.g. triangular, rectangular, teardrop shaped., oval, circular, etc. The ability to manufacture the pins using additive manufacturing means that there is much more flexibility in the shapes that can be produced. The cross-section in the example shown is a teardrop or rounded triangle shape such that the width of the pin tapers in the direction of fluid flow.

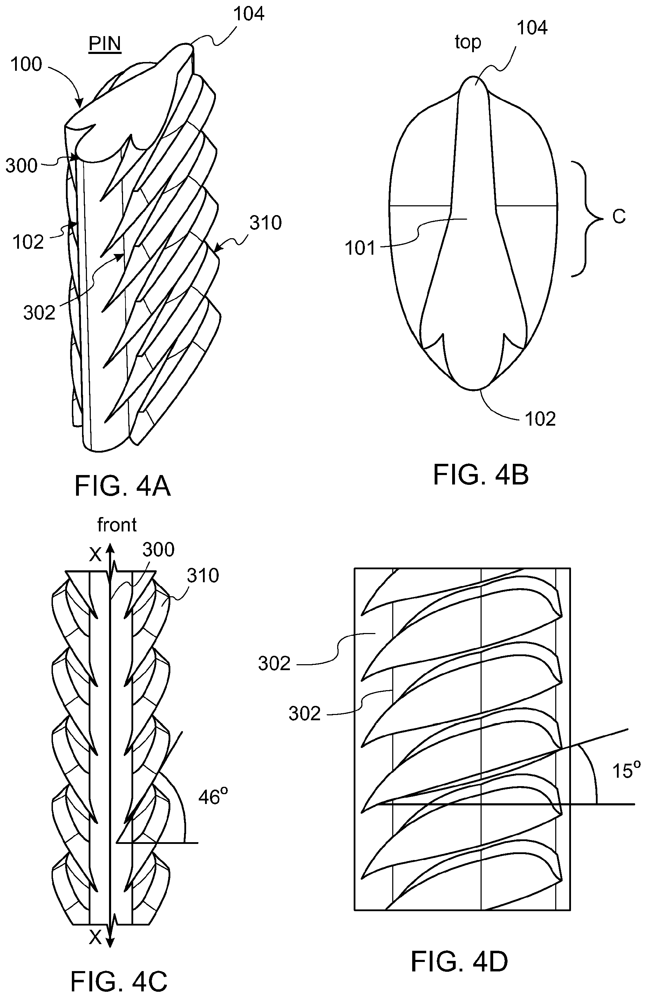

Figure 4 shows the shape of a pin 100 of a pin according to the disclosure. The pin has a leading edge 102 facing the fluid flow towards the pin, and a trailing edge 104, a first end 110 and a second end 120.

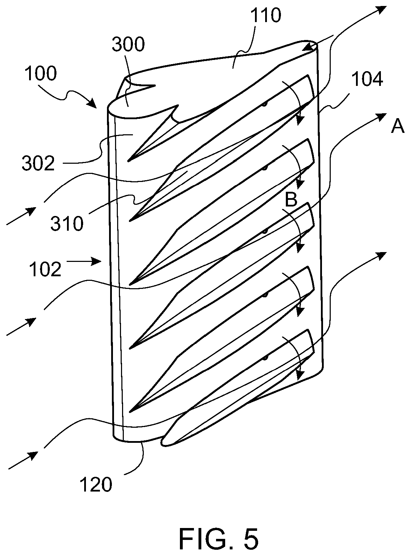

As can be best seen in Figs. 4A to 4D and Fig. 5, the pin 100 has a pin core 300 defining the leading edge 102 and the trailing edge 104. The pin extends from the first, top end 110 and an opposite, bottom end 120. In use, the pin 100 has its bottom end attached to core layer of the heat exchanger. The other end is attached to or close to an adjacent layer. The cross-sectional shape of the pin core 300 of this example is shown as a teardrop or rounded triangle shape such that the width of the pin core tapers from the leading edge 102 to the trailing edge 104. This is just one example, and the pin core can have other cross-sections. The pin core therefore has an outer surface 302 defined between the first end second ends and extending on both sides of the pin from the leading edge to the trailing edge.

The pin further comprises a plurality of vanes 310 extending from the outer surface 302 of the pin core between the leading edge and the trailing edge on either side of the pin core, the vanes arranged one above another in the direction of a pin axis X between the top and bottom ends.

The extending vanes 310 provide an interruption to fluid flow past the pin that introduces turbulence into the fluid flow, thus increasing the heat transfer characteristics of the pin and, further, increases the heat transfer area of the pin.

In the example shown, each of the vanes may have an outer profile that curves in a convex shape C relative to the pin core, which provides a cross-sectional shape of the pin as shown in Fig. 4B and also seen in Figs. 4A and 5. In the example shown, the vanes may have an elliptical profile. The impact of this shape on the fluid flow past the pin can be seen by the arrows A and B, showing fluid flow, in Fig. 5. The fluid first meets the leading edge where it is directed around the sides of the pin and meets the vanes. The fluid flows past the vanes (arrows A) but is also directed around the vanes (arrows B) which creates turbulence in the fluid flow passing the pin. Where several such pins are arranged in an array across the core layer, turbulence increases, so significantly improving the heat transfer characteristics of the core.

The vanes 310 are preferably attached to the core at an angle α of less than 90 deg. relative to the outer surface of the pin core 300 (defined relative to an axis of the pin core from its first end to its second end). In one example, the angle β, the complement to the angle α between the core outer surface and the vane, is 46 deg., but this is only one example, and different angles are possible. In determining the angle, account will be taken of the pressure drop, the manufacturing capabilities and the heat transfer characteristic effect.

In addition, the heat transfer characteristics and pressure drop can be varied according to the angle of attack γ of the vane. This can best be seen in Fig. 4D. Here, the vanes are attached to the pin core at a slope from the leading edge to the trailing edge, and the angle of the slope relative to a straight line across the pin core from the leading edge to the trailing edge is the angle of attack γ. In one example, the angle of attack γ, is 15 deg., but this is only one example, and different angles are possible, e.g. an angle in the range of around 10 to 30 degrees. In determining the angle, account will be taken of the pressure drop, the manufacturing capabilities and the heat transfer characteristic effect. The angle should be selected to avoid excessive pressure drop in the fluid flowing past the pin.

If the vanes are thin, presenting a relatively sharp surface to the fluid, this enhances the turbulence.

The pin shape creates turbulence in the fluid flow thus leading to improved thermal exchange. The shape disturbs the flow of the fluid causing a permanent disturbance of the velocity field, which results in intensive mixing of the fluid particles making the fluid more turbulent. This turbulence is magnified due to the plurality of pins in the layer. The increased turbulence increases the heat transfer coefficient and, thereby, the efficiency of the heat exchanger. Further, the pin shape increases the surface area for the fluid, and hence the heat transfer area, of the pin compared to conventional pins which have a straight outer surface.

In a heat exchanger core, as described above, several such layers will be provided, separated by the sheets. Fig. 2 shows just one such layer but the principle will be the same for each layer.

It is possible that the number of pins and/or the pattern in which the pins are arranged is the same for each layer, but it is also feasible that different layers have different numbers of pins and/or patterns of pins. The layers may also be the same height (defined between the sheets) or different layers may have different heights depending on the application.

The pins according to this design may or may not be used in the turnaround section of the heat exchanger.

As the fluid, e.g. oil, enters the heat exchanger through the inlet side 32 it meets a set of pins with vanes 310, the (preferably sharp) fins being fixed to and extending from the pin core as described above. Vortices form at the fins, thus increasing the efficiency of the heat exchanger. Downstream, as the fluid passes more sets of pins, the flow becomes highly turbulent and, further, the heat transfer surface area is increased due to the fins.

At the end of the first portion of the layer, the flow is turned by 90 degrees by the vanes in the turning section and then returns, past pins, in the return portion of the layer to the outlet side.

Any or all parts of the heat exchanger 10 other than the pins may be made from metal. In some embodiments, some or all parts are made from an austenitic nickel-chromium-based superalloy, such as the Inconel family of metals manufactured by the Special Metals Corporation of New York state, USA. In other embodiments, some or all parts may be made from an aluminium alloy, a titanium alloy, stainless steel or copper.

The first and second fluids may be oil, such that the heat exchanger 10 is an oil-oil heat exchanger. However, in other embodiments, the first fluid may be different from the second fluid. Other fluids, including air, water, fuel(s), or carbon dioxide are also envisaged for either or both of the first and second fluids.

The pin design according to this disclosure has improved fluidic and thermal heat exchange properties compared to conventional smooth/straight surface pins. Because of this, a heat exchanger can have fewer layers than is conventional to achieve the same performance. This provides cost, assembly, size and weight savings. By making the pins using additive manufacture, the precise design can be easily adjusted/modified according to the requirements of the application.

## Claims

1. A pin for a core layer of a heat exchanger, the pin configured such that fluid flowing through the layer passes the pin, the pin (100) having a leading edge, a trailing edge, a first and a second end, and an outer surface between the leading edge and trailing edge and the first and second ends, and wherein the pin (100) comprises a pin core (300) extending from the first end to the second end and defining the leading edge and the trailing edge, and a plurality of vanes (310) extending from the pin core, each vane extending between the leading edge and the trailing edge, and the vanes arranged one above another in the direction from the first end to the second end; and **characterised in that**:
each vane defines a convex curve from the leading edge to the trailing edge, and each vane is attached to the pin core at an angle of less than 90 degrees relative to the pin core

2. A pin according to claim 1, the pin core having a cross-section that tapers from the leading edge to the trailing edge.

3. The pin of claim 2, wherein the cross-section is a rounded triangular shape.

4. The pin of claim 1, 2 or 3, wherein each vane is attached to the pin core at an angle of less than 45 degrees relative to the pin core.

5. The pin of any preceding claim, wherein the position of attachment of the vanes to the pin core defines a slope from the leading edge to the trailing edge.

6. The pin of claim 5, where the angle of the slope is substantially 15 degrees.

7. A layer for a heat exchanger, the layer comprising:
an inlet (32);
an outlet (34);
an upper sheet;
a lower sheet;
a fluid flowpath defined between the upper sheet and lower sheet and from the inlet to the outlet; and
at least one pin (100) as defined by any of claims 1 to 6, disposed in the flowpath and connecting the upper sheet to the lower sheet

8. The layer of claim 7, having a plurality of said at least one pin (100).

9. The layer of claim 8, the layer defining an inflow path from the inlet, and an outflow path to the outlet, the inflow path and the outflow path being separated in the layer by a separation bar, the inflow path and the outflow path each having a plurality of said pins, the layer further comprising a plurality of turning vanes to turn the direction of flow from the inflow path by substantially 180 degrees to the outflow path.

10. The layer of claim 9, wherein the plurality of turning vanes includes a first plurality of vanes to turn the direction of flow from the inflow path by substantially 90 degrees and a second plurality of turning vanes to turn the direction of flow by a further 90 degrees to the outflow path.

11. A heat exchanger comprising a first layer and a second layer;
wherein the first layer is a layer according to any of claims 7 to 10;
wherein the second layer is a layer according to any of claims 7 to 10; and
wherein the upper sheet of the second layer is also the lower sheet of the first layer.

12. A method of additively manufacturing a pin for layer for a heat exchanger, the method comprising:
additively manufacturing a pin as claimed in any of claims 1 to 6.

## Patentansprüche

1. Stift für eine Kernschicht eines Wärmetauschers, wobei der Stift derart konfiguriert ist, dass Fluid, das durch die Schicht strömt, den Stift passiert, wobei der Stift (100) eine Vorderkante, eine Hinterkante, ein erstes und ein zweites Ende und eine Außenfläche zwischen der Vorderkante und der Hinterkante und dem ersten und dem zweiten Ende aufweist, und wobei der Stift (100) einen Stiftkern (300), der sich von dem ersten Ende zu dem zweiten Ende erstreckt und die Vorderkante und die Hinterkante definiert, und eine Vielzahl von Schaufeln (310), die sich von dem Stiftkern erstrecken, umfasst, wobei sich jede Schaufel zwischen der Vorderkante und der Hinterkante erstreckt und die Schaufeln übereinander in der Richtung von dem ersten Ende zu dem zweiten Ende angeordnet sind; und **dadurch gekennzeichnet, dass**:
jede Schaufel eine konvexe Kurve von der Vorderkante zu der Hinterkante definiert und jede Schaufel an dem Stiftkern in einem Winkel von weniger als 90 Grad relativ zu dem Stiftkern angebracht ist.

2. Stift nach Anspruch 1, wobei der Stiftkern einen Querschnitt aufweist, der sich von der Vorderkante zu der Hinterkante verjüngt.

3. Stift nach Anspruch 2, wobei der Querschnitt eine abgerundete Dreiecksform aufweist.

4. Stift nach Anspruch 1, 2 oder 3, wobei jede Schaufel an dem Stiftkern in einem Winkel von weniger als 45 Grad relativ zu dem Stiftkern angebracht ist.

5. Stift nach einem der vorhergehenden Ansprüche, wobei die Position der Anbringung der Schaufeln an dem Stiftkern eine Neigung von der Vorderkante zu der Hinterkante definiert.

6. Stift nach Anspruch 5, wobei der Winkel der Neigung im Wesentlichen 15 Grad beträgt.

7. Schicht für einen Wärmetauscher, wobei die Schicht umfasst:
einen Einlass (32);
einen Auslass (34);
ein oberes Blech;
ein unteres Blech;
einen Fluidströmungsweg, der zwischen dem oberen Blech und dem unteren Blech und von dem Einlass zu dem Auslass definiert ist; und
mindestens einen Stift (100) nach einem der Ansprüche 1 bis 6, der in dem Strömungsweg angeordnet ist und das obere Blech mit dem unteren Blech verbindet.

8. Schicht nach Anspruch 7, aufweisend eine Vielzahl des mindestens einen Stifts (100).

9. Schicht nach Anspruch 8, wobei die Schicht einen Zuflussweg von dem Einlass und einen Abflussweg zu dem Auslass definiert, wobei der Zuflussweg und der Abflussweg in der Schicht durch eine Trennleiste getrennt sind, wobei der Zuflussweg und der Abflussweg jeweils eine Vielzahl der Stifte aufweisen, wobei die Schicht ferner eine Vielzahl von Umlenkschaufeln umfasst, um die Strömungsrichtung von dem Zuflussweg um im Wesentlichen 180 Grad zu dem Abflussweg umzulenken.

10. Schicht nach Anspruch 9, wobei die Vielzahl von Umlenkschaufeln eine erste Vielzahl von Schaufeln beinhaltet, um die Strömungsrichtung von dem Zuflussweg um im Wesentlichen 90 Grad umzulenken, und eine zweite Vielzahl von Umlenkschaufeln, um die Strömungsrichtung um weitere 90 Grad zu dem Abflussweg umzulenken.

11. Wärmetauscher, umfassend eine erste Schicht und eine zweite Schicht;
wobei die erste Schicht eine Schicht nach einem der Ansprüche 7 bis 10 ist;
wobei die zweite Schicht eine Schicht nach einem der Ansprüche 7 bis 10 ist; und
wobei das obere Blech der zweiten Schicht zugleich das untere Blech der ersten Schicht ist.

12. Verfahren zum additiven Fertigen eines Stifts für eine Schicht für einen Wärmetauscher, wobei das Verfahren umfasst: additives Fertigen eines Stifts nach einem der Ansprüche 1 bis 6.

## Revendications

1. Broche pour une couche centrale d'un échangeur de chaleur, la broche étant configurée de telle sorte que du fluide s'écoulant à travers la couche passe devant la broche, la broche (100) ayant un bord d'attaque, un bord de fuite, une première et une seconde extrémité, ainsi qu'une surface extérieure entre le bord d'attaque et le bord de fuite, et les première et seconde extrémités, et dans laquelle la broche (100) comprend un noyau (300) de broche se prolongeant de la première extrémité à la seconde extrémité et définissant le bord d'attaque et le bord de fuite, et une pluralité d'aubes (310) se prolongeant depuis le noyau de broche, chaque aube se prolongeant entre le bord d'attaque et le bord de fuite, et les aubes étant agencées les unes au-dessus des autres de la première à la seconde extrémité et **caractérisée en ce que** :
chaque aube définit une courbe convexe du bord d'attaque au bord de fuite, et chaque aube est fixée au noyau de broche à un angle inférieur à 90 degrés par rapport au noyau de broche.

2. Broche selon la revendication 1, le noyau de broche ayant une section transversale qui se rétrécit du bord d'attaque au bord de fuite.

3. Broche selon la revendication 2, dans laquelle la section transversale est une forme triangulaire arrondie.

4. Broche selon la revendication 1, 2 ou 3, dans laquelle chaque aube est fixée au noyau de broche à un angle inférieur à 45 degrés par rapport au noyau de broche.

5. Broche selon une quelconque revendication précédente, dans laquelle la position de fixation des aubes au noyau de broche définit une pente du bord d'attaque au bord de fuite.

6. Broche selon la revendication 5, où l'angle de la pente est sensiblement de 15 degrés.

7. Couche pour un échangeur de chaleur, la couche comprenant :
une entrée (32) ;
une sortie (34) ;
une feuille supérieure ;
une feuille inférieure ;
un chemin d'écoulement de fluide défini entre la feuille supérieure et la feuille inférieure et de l'entrée à la sortie ; et
au moins une broche (100) selon l'une quelconque des revendications 1 à 6, disposée dans le chemin d'écoulement et reliant la feuille supérieure à la feuille inférieure.

8. Couche selon la revendication 7, ayant une pluralité de ladite au moins une broche (100).

9. Couche selon la revendication 8, la couche définissant un chemin de débit entrant depuis l'entrée, et un chemin de débit sortant vers la sortie, le chemin de débit entrant et le chemin de débit sortant étant séparés dans la couche par une barre de séparation, le chemin de débit entrant et le chemin de débit sortant ayant chacun une pluralité desdits broches, la couche comprenant également une pluralité d'aubes tournantes pour faire tourner la direction d'écoulement du chemin de débit entrant de sensiblement 180 degrés vers le chemin de débit sortant.

10. Couche selon la revendication 9, dans laquelle la pluralité d'aubes tournantes comporte une première pluralité d'aubes pour faire tourner la direction d'écoulement du chemin de débit entrant de sensiblement 90 degrés et une seconde pluralité d'aubes tournantes pour faire tourner la direction d'écoulement d'encore 90 degrés vers le chemin de débit sortant.

11. Échangeur de chaleur comprenant une première couche et une seconde couche ;
dans lequel la première couche est une couche selon l'une quelconque des revendications 7 à 10 ;
dans lequel la seconde couche est une couche selon l'une quelconque des revendications 7 à 10 ; et
dans lequel la feuille supérieure de la seconde couche est également la feuille inférieure de la première couche.

12. Procédé de fabrication additive d'une broche pour une couche pour un échangeur de chaleur, le procédé comprenant :
la fabrication additive d'une broche selon l'une quelconque des revendication 1 à 6.
